# EUROPEAN PATENT APPLICATION

(11) **EP 4 606 844 A1**
(43) Date of publication of application: **27.08.2025**
(21) Application number: 23879428.3
(22) Date of filing: 31.07.2023
(51) Int. Cl.: C08J 5/18, B32B 15/088, B32B 15/20

(54) **BIAXIALLY ORIENTED POLYAMIDE FILM FOR COLD MOLDING**

(30) Priority: 21.10.2022 JP 2022169191
(71) Applicant: Toyobo Co., Ltd., Kita-ku Osaka-shi, Osaka 530-0001 (JP)
(72) Inventor: TAMARI, Noboru, Inuyama-shi, Aichi 484-8508 (JP); NAGASAKA, Ayame, Inuyama-shi, Aichi 484-8508 (JP); GOTO, Takamichi, Inuyama-shi, Aichi 484-8508 (JP)
(74) Representative: Vossius & Partner Patentanwälte Rechtsanwälte mbB
(86) International application number: PCT/JP2023/027978
(87) International publication number: WO 2024/084775

(57) **Abstract**

[Problem] To provide a biaxial polyamide film, which is suitable for cold molding and which is excellent in cold moldability, has excellently low hygroscopicity, and can be used for the outermost layer of a battery external material even in a single membrane form.

[Solution] This biaxially oriented polyamide film for cold molding comprises 80-100 mass% of polyamide 11, wherein in a direction in which an F30/upper yield stress value, which is a value obtained by dividing stress (F30) with a 30% elongation by upper yield stress, is larger among the film flow direction and the film width direction, the F30/upper yield stress value is 2.0-3.0.

## Description

### TECHNICAL FIELD

The present invention relates to a polyamide film for cold forming used in the field of packaging pharmaceuticals and industrial products.

### BACKGROUND ART

Recently, lithium batteries have been used for a broad range of purposes, including small-sized large-capacity power supplies for personal computers, mobile terminal devices (for example, mobile phones and PDAs), video cameras, electric vehicles, energy storage batteries, robots, and satellites. As casings for lithium batteries, metal cans formed by press-working metal into a cylindrical or rectangular container shape, as well as pouches formed from multi-layered films having a structure of "outermost layer/aluminum/sealant layer" have been used. Among them, from the viewpoint of degree of freedom in shape, miniaturization, and heat dissipation performance for battery heat generation, pouch-shaped casings formed from multi-layer films have been particularly preferred in recent years.

In Patent Document 1, it is disclosed that a laminated film of substrate layer/thin metal layer/sealant layer laminated in this order, wherein the substrate layer has a Young's modulus of from 2.5 GPa to 4.5 GPa and is 1.5 times to 3.0 times as thick as the thin metal layer, can be suitably used as a casing material for electrical storage devices. As the substrate layer, a biaxially stretched polyethylene terephthalate film and a biaxially stretched nylon film are used either individually or in a laminated form.

### CITATION LIST

### PATENT DOCUMENT

Patent Document 1: JP-A-2018-147860

### SUMMARY OF THE INVENTION

### PROBLEMS TO BE SOLVED BY THE INVENTION

Multilayered films used as battery packaging and casing materials are required to have characteristics such as cold formability, low hygroscopicity, and puncture resistance. Conventionally, as a battery packaging and casing materials, for example, a laminate in which a biaxially stretched polyester film / biaxially stretched polyamide 6 film / aluminum foil / unstretched polyolefin film are laminated in this order has been generally used. In this laminate, the biaxially stretched polyamide 6 film develops cold formability and puncture resistance, and the biaxially stretched polyester film develops low hygroscopicity. However, in applications involving deep drawing, such as a casing material for electric car batteries, the use of such a laminate may be inappropriate due to the lamination of the biaxially stretched polyester film, which has low cold formability. Furthermore, since polyamide 6 films have high hygroscopicity, their use in environments with uncontrolled humidity may result in deformation or destruction of the film due to moisture absorption. In addition, forming the two-layer structure of the outermost layer causes increases in the cost and complexity due to an additional lamination process, hence, a solution using a single-layer film is desired.

It is an object of the present invention to provide a biaxially stretched polyamide film for cold forming that has high cold formability and low hygroscopicity, and that can be used as an outermost layer of a battery casing material, even as a single-layer film.

### SOLUTION TO THE PROBLEMS

The present inventors have found that a biaxially stretched polyamide film formed from a polyamide resin composition containing 80% by mass or more and 100% by mass or less of polyamide 11 exhibits excellent low hygroscopicity. Further, the present inventors have focused on a stress at 30% elongation (F30) and an upper yield stress and, have found that a biaxially stretched polyamide film having an F30/upper yield stress value, which is obtained by dividing the stress at 30% elongation (F30) by the upper yield stress, within a predetermined range, exhibits high cold formability, in particular, high deep drawability. The present inventors have completed the present invention having the following features as a result of further investigation and improvement.
(1) A biaxially stretched polyamide film for cold forming, comprising a polyamide 11 in an amount of 80% by mass or more and 100% by mass or less,
   wherein the film has an F30/upper yield stress value of 2.0 or more and 3.0 or less in a direction having a larger F30/upper yield stress value between a flow direction and a width direction of the film, where the F30/upper yield stress value is obtained by dividing a stress at 30% elongation (F30) by the upper yield stress.
(2) The biaxially stretched polyamide film for cold forming according to 1, wherein the film has elongations at moisture absorption of 0% or more and 0.5% or less in both the flow direction and the width direction of the film.
(3) The biaxially stretched polyamide film for cold forming according to 1 or 2, wherein the film has a value (N/25µm) obtained by adjusting a puncture strength (N) to a film thickness of 25 µm of 17 N/25µm or more.
(4) The biaxially stretched polyamide film for cold forming according to any one of 1 to 3, wherein the film has a dynamic coefficient of friction of 0.1 or more and 1.0 or less.
(5) A laminate comprising the biaxially stretched polyamide film for cold forming according to any one of 1 to 4 and a metal layer laminated on at least one surface of the film.
(6) The laminate according to 5, wherein the metal layer is an aluminum layer having a thickness of 15 µm or more and 80 µm or less.
(7) The laminate according to 6, wherein the laminate includes the biaxially stretched polyamide film for cold forming, the metal layer, and a sealant layer laminated in this order.
(8) A battery packaging material including the laminate according to 7.

### EFFECTS OF THE INVENTION

According to the present invention, a biaxially stretched polyamide film suitable for cold forming, having high cold formability and low hygroscopicity, and capable of being used as an outermost layer of a battery casing material, even as a single layer, can be provided.

### BRIEF DESCRIPTION OF DRAWINGS

[Fig. 1] Fig. 1 is a schematic diagram illustrating an exemplary stress-strain curve.
[Fig. 2] Fig. 2 is a plan view of a metal mold used to evaluate the degree of deep drawing of a laminate.
[Fig. 3] Fig. 3 is a A-A' cross-sectional view of a metal mold used to evaluate the degree of deep drawing of a laminate.

### DESCRIPTION OF EMBODIMENTS

### [Resin Composition]

The content of polyamide 11 in the constituent components of the polyamide resin contained in the biaxially stretched polyamide film of the present invention is preferably from 80% by mass to 100% by mass, more preferably from 83% by mass to 97% by mass, and most preferably from 86% by mass to 94% by mass. The inclusion of 80% by mass or more of polyamide 11 imparts low hygroscopicity to the resulting biaxially stretched polyamide film, thereby preventing deformation or destruction of the battery packaging material due to moisture absorption. The hygroscopicity of polyamide resins is mainly determined by the concentration of amide groups in the polymer chain. Polyamide 11 contains 10 methylene groups units in its repeating unit, and thus has a lower amide group concentration compared to, for example, polyamide 6, which has five methylene groups units in its repeating unit. Therefore, the use of polyamide 11 effectively reduces hygroscopicity.

The amount of polyamide resins other than polyamide 11 in the constituent components of the polyamide resin is preferably from 0% by mass to 20% by mass, more preferably from 3% by mass to 17% by mass, and most preferably from 6% by mass to 14% by mass. Although the inclusion of a polyamide resin other than polyamide 11 is not essential, the addition of the polyamide resin other than polyamide 11 within the range can improve film stretchability and thus the film formation stability.

Polyamide 11 is a polyamide resin having a structure in which monomers containing 11 carbon atoms are linked through amide bonds. Typically, the polyamide 11 is produced using aminoundecanoic acid or undecane lactam as monomers. Since aminoundecanoic acid is a monomer derived from castor oil, the use of a polyamide 11 derived from a biomass raw material is particularly desirable from the viewpoint of net-zero emissions.

Examples of the polyamide resin other than polyamide 11 is not particularly limited, and include nylon 6, nylon 12, nylon 66, nylon 610, nylon 612, and MXD nylon; copolymerized polyamides such as nylon 6-12, nylon 6-69, nylon 6-66, nylon 66-610, and nylon 6-66-610; and aromatic polyamides such as nylon MXD6 and nylon 6T-6I.

Polyamide 11 has a relative viscosity of preferably from 1.8 to 4.5, and more preferably from 2.4 to 3.2. The relative viscosity of 1.8 or more allows the film to have sufficient puncture strength and also facilitates orientation during stretching, thereby making it easier to adjust the F30/upper yield stress value within a predetermined range. The relative viscosity of 4.5 or less can prevent extrusion troubles such as failure to extrude molten resin caused by an excessive extruder load.

### [Auxiliary Material and Additive]

The biaxially stretched polyamide film of the present invention may contain various additives as necessary, such as a lubricant, a heat stabilizer, an antioxidant, an antistatic agent, an antifogging agent, an ultraviolet absorber, a dye, and a pigment.

### [Lubricant]

The biaxially stretched polyamide film of the present invention may contain fine particles as a lubricant for improving the slipperiness and thereby enhancing cold formability. The fine particles may be appropriately selected and used from inorganic fine particles such as silica, kaolin, and zeolite, and polymeric organic fine particles such as acrylic-based and polystyrene-based fine particles. Silica fine particles are preferably used from the viewpoint of transparency and slipperiness. The fine particles have an average particle size of preferably from 0.5 µm to 5.0 µm, and more preferably from 1.0 µm to 3.0 µm. When the average particle size is 0.5 µm or more, good slipperiness can be achieved with a small amount of addition. Conversely, the average particle size of 5.0 µm or less prevents excessive surface roughness of the film, thereby avoiding deterioration of its appearance.

When silica fine particles are used, the pore volume of the silica is preferably from 0.5 ml/g to 2.0 ml/g, and more preferably from 0.8 ml/g to 1.6 ml/g. The pore volume of 0.5 ml/g or more can prevent worsening of the film transparency caused by void formation. The pore volume of 2.0 ml/g or less ensures sufficient surface protrusions.

The lower limit of the fine particles content is preferably 100 ppm by mass, more preferably 300 ppm by mass, and most preferably 500 ppm by mass. The fine particles contained in an amount of 100 ppm by mass or more can improve film slipperiness and prevent blocking when the film is formed into a roll. The upper limit of the fine particles content is preferably 10000 ppm by mass, more preferably 6000 ppm by mass, and most preferably 2000 ppm by mass. The fine particles contained in an amount of 10000 ppm by mass or less improves the transparency of the film.

The biaxially stretched polyamide film of the present invention may contain a fatty acid amide and/or a fatty acid bisamide to improve slipperiness. Examples of the fatty acid amide and the fatty acid bisamide include erucic acid amide, stearic acid amide, ethylene bisstearic acid amide, ethylene bisbehenic acid amide, and ethylene bisoleic acid amide. When the film contains the fatty acid amide and/or the fatty acid bisamide, the content of the fatty acid amide and/or the fatty acid bisamide is preferably from 0.01% by mass to 0.40% by mass, and more preferably from 0.05% by mass to 0.30% by mass. The content of the fatty acid amide and/or the fatty acid bisamide of 0.01% by mass or more can impart sufficient slipperiness. The content of 0.40% by mass or less can prevent worsening of wettability.

### [Antioxidant]

The biaxially stretched polyamide film of the present invention may contain an antioxidant. A phenolic antioxidant is preferably used as the antioxidant, and a fully hindered phenolic compound or a partially hindered phenolic compound is preferably used as the phenolic antioxidant. Examples of the phenolic antioxidants include tetrakis-[methylene-3-(3',5'-di-tert-butyl-4'-hydroxyphenyl) propionate]methane, stearyl-β-(3,5-di-tert-butyl-4-hydroxyphenyl)propionate, and 3,9-bis[1,1-dimethyl-2-[β-(3-tert-butyl-4-hydroxy-5-methylphenyl)propionyloxy]ethyl]-2,4,8,10-tetraoxaspiro[5,5]undecane. The inclusion of the phenolic antioxidant can improve the film-forming operability of the biaxially stretched polyamide film.

### [Biaxially Stretched Polyamide Film]

The thickness of the biaxially stretched polyamide film of the present invention is not particularly limited, but is preferably 100 µm or less. A biaxially stretched polyamide film with a thickness of from 5 µm to 50 µm is generally used, and more preferably, a biaxially stretched polyamide film with a thickness of from 8 µm to 30 µm is used.

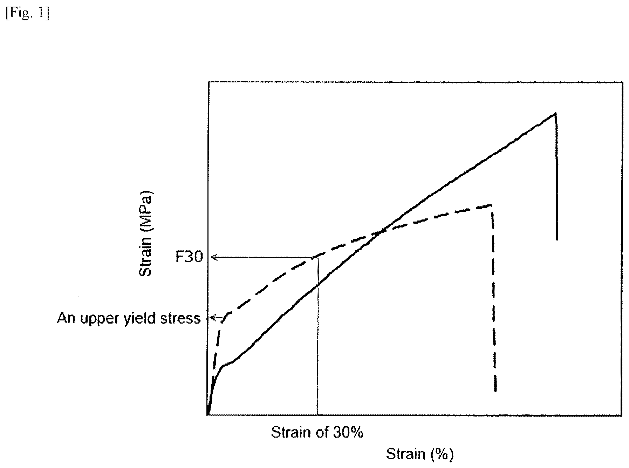

In the present invention, stresses at 30% elongation (also referred to as "F30") and upper yield stresses are measured in the flow direction (hereinafter, merely referred to as "MD direction" in some cases) and the width direction (hereinafter, merely referred to as "TD direction" in some cases) of the film, and the maximum value of the F30/upper yield stress values, which is obtained by dividing the stress at 30% elongation by the upper yield stress, is preferably 2.0 or more and 3.0 or less in either the MD direction or the TD direction of the film. The maximum value is more preferably 2.1 or more and 2.9 or less, and further preferably 2.2 or more and 2.8 or less. A maximum value of 2.0 or more imparts sufficient cold formability. The maximum value of 3.0 or less improves stability during film formation. As shown in Fig. 1, the F30/upper yield stress value represents the slope of the stress-strain curve (hereinafter, merely "SS curve" in some cases), and a larger F30/upper yield stress value indicates that the SS curve has a steeper slope. If the biaxially stretched polyamide film exhibits a steep SS curve, it is meant that the film can be uniformly drawn during cold forming. For example, in the case of a laminate having a structure in which biaxially stretched polyamide film/aluminum foil/unstretched polyolefin film are laminated in this order, the aluminum foil is the hardest to draw and breakage occurs first in the aluminum foil during cold forming. When a film that exhibits a steep SS curve as in the present invention is used, the film is uniformly formed into a shape, and local stretching of the film is prevented. As a result, tearing of the aluminum foil can be prevented, and cold formability can be improved.

The biaxially stretched polyamide film of the present invention has elongations at moisture absorption in the film flow direction and the width direction of preferably 0% or more and 0.50% or less, more preferably 0.05% or more and 0.45% or less, and particularly preferably 0.10% or more and 0.40% or less. The elongations at moisture absorption of 0% or more can prevent the film from shrinkage under high humidity conditions, thereby suppressing damage to the battery packaging material caused by moisture shrinkage. The elongations at moisture absorption of 0.50% or less can prevent the film from elongation under high humidity conditions, thereby suppressing deformation of the battery packaging material due to elongation.

The biaxially stretched polyamide film of the present invention has a puncture strength as a value adjusted to a film thickness of 25 µm of preferably 17.0 N/25µm or more, more preferably 17.5 N/25µm or more, and particularly preferably 18.0 N/25µm or more. The puncture strength of 17.0 N/25µm or more can prevent tearing originating from a protruding part of the film (for example, four corners in the case of a square shape) during cold forming. The upper limit of the puncture strength is not particularly limited, and is preferably 50 N/25µm or less, more preferably 40 N/25µm or less. If the puncture strength is too high, it can lead to unstable film formation, and thus troubles in the film-forming process, such as breakage during stretching.

The biaxially stretched polyamide film of the present invention has a dynamic coefficient of friction of preferably 0.10 or more and 1.0 or less, more preferably 0.13 or more and 0.8 or less, and particularly preferably 0.16 or more and 0.6 or less. The dynamic coefficient of friction of 1.0 or less can prevent tearing during cold forming. A high dynamic coefficient of friction inhibits slippage between the metal mold and the film, causing stress to concentrate on a specific area and increasing the likelihood of film tearing. The dynamic coefficient of friction of 0.10 or more can suppress a reduction in transparency that can result from using a large amount of a lubricant.

The lower limit of the degree of deep drawing of the laminate of the present invention, is preferably 4.0 mm or more, more preferably 4.2 mm or more, and particularly preferably 4.4 mm or more. The degree of deep drawing of 4.0 mm or more allows the laminate to be appropriately used for deep drawing. The "laminate" as used herein represents a structure in which biaxially stretched polyamide film (25 µm)/Al foil (40 µm)/unstretched polypropylene film (70 µm) are laminated in this order, as described below.

### [Method for Producing Biaxially Stretched Polyamide Film]

Hereinafter, a representative production example of the biaxially stretched polyamide film of the present invention will be described.

First, raw material resins are melt extruded using an extruder. Subsequently, a molten resin is extruded from a T-die into a film form, then cast onto a cooling roll for cooling, and an unstretched film can be obtained. The melting temperature of the resin is preferably from 220°C to 350°C. When the melting temperature is 220°C or higher, poor appearance due to defects such as unmelted materials can be prevented. When the melting temperature is 350°C or lower, it is possible to prevent a decrease in strength due to molecular weight reduction caused by resin degradation and poor appearance due to carbides. The temperature of the T-die is preferably from 250°C to 350°C.

The temperature of the cooling roll is preferably from -30°C to 80°C, and further preferably from 0°C to 50°C. In order to obtain an unstretched film by casting and cooling the film-shaped molten material extruded from the T-die onto a rotating cooling roll, methods such as using an air knife or an electrostatic adhesion method involving the application of a static charge can be preferably employed. Particularly, the latter method is preferably used.

Also, it is preferable to cool the surface of the cast unstretched film opposite to the surface in contact with the cooling roll. For example, a method such as bringing a cooling liquid in a tank into contact with the opposite surface of the unstretched film to the cooling roll applying a vaporized liquid with a spray nozzle, or cooling by blowing a high-velocity fluid can be preferably used in combination. The obtained unstretched film is then stretched in two axial directions to obtain the biaxially stretched polyamide film of the present invention.

As a stretching method, either a simultaneous biaxial stretching method or a sequential biaxial stretching method can be employed. In either method, the stretching method in the MD direction involves single-stage stretching or multistage stretching such as two-stage stretching. Rather than single-stage stretching, the multistage stretching in the MD direction, such as two-stage stretching, is preferred from the viewpoints of physical properties and the uniformity (isotropy) of physical properties in both the MD direction and the TD direction. In the sequential biaxial stretching method, stretching in the MD direction is conducted preferably by roll stretching.

The lower limit of the stretching temperature in the MD direction is preferably 50°C, more preferably 55°C, and particularly preferably 60°C. The stretching temperature of 50°C or higher enables stretching of the film. The upper limit of the stretching temperature in the MD direction is preferably 110°C, more preferably 105°C, and particularly preferably 100°C. The stretching temperature of 110°C or lower enables stable stretching.

The lower limit of the stretching ratio in the MD direction (a total stretching ratio in the case of multistage stretching, which is obtained by multiplying the stretching ratio in each stage) is preferably 2.2 times, more preferably 2.5 times, and particularly preferably 2.8 times. The stretching ratio in the MD direction of 2.2 times or more enables sufficient thickness accuracy in the MD direction and sufficient puncture strength, making it easier for the F30/upper yield stress value to be adjusted within the range specified by the claim. The upper limit of the stretching ratio in the MD direction is preferably 4.0 times, more preferably 3.9 times, and particularly preferably 3.8 times. The stretching ratio in the MD direction of 4.0 times or less enables subsequent stretching in the TD stretching process.

In the case of multistage stretching in the MD direction, stretching can be carried out as described above in each stretching stage, and the stretching ratio in each stage is preferably adjusted so that the total stretching ratio in the MD direction, which is a product of the stretching ratios in each stage, becomes 4.0 or less. For example, in the case of two-stage stretching, the stretching ratio in the first stage is preferably from 1.5 times to 2.0 times, and the stretching ratio in the second stage is preferably from 1.5 times to 2.0 times.

The film stretched in the MD direction is then stretched in the TD direction using a tenter, subjected to a heat setting treatment, and undergoes a relaxation treatment (also referred to as a "stress relief treatment"). The lower limit of the stretching temperature in the TD direction is preferably 50°C, more preferably 55°C, and particularly preferably 60°C. The stretching temperature of 50°C or higher enables stretching of the film. The upper limit of the stretching temperature in the TD direction is preferably 160°C, more preferably 155°C, and particularly preferably 150°C. The stretching temperature of 160°C or lower enables stable stretching.

The lower limit of the stretching ratio in the TD direction (a total stretching ratio in the case of multistage stretching, which is obtained by multiplying the stretching ratio in each stage) is preferably 2.8 times, more preferably 3.2 times, and particularly preferably 3.5 times. The stretching ratio in the TD direction of 2.8 times or more, not only the thickness accuracy in the TD direction is sufficient, but the puncture strength is also adequate, and the F30/upper yield stress value can be easily adjusted within the range specified by the claims. The upper limit of the stretching ratio in the TD direction is preferably 5.0 times, more preferably 4.7 times, and particularly preferably 4.3 times. The stretching ratio in the TD direction of 5.0 times or less can prevent breakage during TD stretching.

The lower limit of an area stretching ratio (the stretching ratio in the MD direction × the stretching ratio in the TD direction) is preferably 10.0 times, more preferably 10.5 times, and particularly preferably 11.0 times. The area stretching ratio of 10.0 times or more, not only the thickness accuracy is sufficient, but the puncture strength is also adequate, and the F30/upper yield stress value can be easily adjusted within the range specified by the claims. The upper limit of the area stretching ratio is preferably 16.5 times, more preferably 16.0 times, and particularly preferably 15.5 times. The area stretching ratio of 16.5 times or less can prevent breakage during stretching.

The lower limit of the heat setting temperature is preferably 150°C, and more preferably 160°C. The heat setting temperature of 150°C or higher allows the heat shrinkage of the film to be sufficiently reduced, thereby improving processability in subsequent processes such as a lamination process. The upper limit of the heat setting temperature is preferably 210°C, and more preferably 200°C. The heat setting temperature of 210°C or lower makes it possible to suppress whitening of the film, a decrease in the puncture strength, and a decrease in the F30/upper yield stress value.

The heat setting time is preferably from 0.5 seconds to 20 seconds, and further preferably from 1 second to 15 seconds. The heat setting time can be appropriately determined in accordance with the heat setting temperature and the air velocity in the heat setting zone.

A relaxation treatment is preferably conducted after the heat setting treatment from the viewpoint of controlling the heat shrinkage rate. The relaxation treatment temperature is a temperature in the range of from the heat setting temperature to the glass transition temperature (Tg) of the resin, and more preferably in a temperature range of from "the heat setting temperature - 10°C" to "the Tg + 10°C". An excessively high relaxation treatment temperature is not preferable because it undesirably causes an excessively rapid shrinkage rate and thus cause distortion or other defects. Conversely, the relaxation treatment cannot be appropriately conducted at a significantly low relaxation treatment temperature. Instead, the film is merely loosened without a decrease in the heat shrinkage rate, resulting in worsened processability.

The lower limit of the relaxation rate in the relaxation treatment is preferably 0.5%, and more preferably 1%. The relaxation rate of 0.5% or more can sufficiently lower the heat shrinkage rate and improve processability. The upper limit of the relaxation rate is preferably 20%, more preferably 15%, and particularly preferably 10%. The relaxation rate of 20% or less can prevent sagging of the film in the TD direction, thereby preventing wrinkling and deterioration of productivity.

In addition, a heat treatment and a moisture conditioning treatment may be carried out to improve dimensional stability, according to purposes. Furthermore, the film may be subjected to corona treatment, coating treatment, or flame treatment to enhance the surface adhesion of the film, and the film may also be subjected to a printing process, and a deposition process to deposit metals and inorganic oxides.

A printing layer may be laminated on the biaxially stretched polyamide film of the present invention. As printing inks for forming the printing layer, water-based and solvent-based resin-containing printing inks can be preferably used. Examples of the resins used in the printing inks include acrylic-based resins, urethane-based resins, polyester-based resins, vinyl chloride-based resins, vinyl acetate copolymer resins, and mixtures thereof. The printing ink may contain known additives such as an antistatic agent, a light shielding agent, an ultraviolet absorber, a plasticizer, a lubricant, a filler, a coloring agent, a stabilizer, a lubricating agent, a defoamer, a crosslinking agent, an anti-blocking agent, and an antioxidant.

Printing methods for providing the printing layer are not particularly limited, and known printing methods such as an offset printing method, a gravure printing method, and a screen printing method can be used. After printing, solvents can be dried by known drying methods such as hot air-drying, heat roll drying, and infrared drying.

A layer made from other materials may be laminated on the biaxially stretched polyamide film. The lamination methods include, but are not limited to, a method in which the layer is laminated after the production of the biaxially stretched polyamide film and a method in which the layer is laminated during film formation.

### [Metal Layer]

The present invention can further provide a laminate in which a metal layer is laminated on at least one surface of the biaxially stretched polyamide film. The metal layer may be laminated so as to be in direct contact with the biaxially stretched polyamide film of the present invention or may be laminated via another layer, such as an adhesive layer.

Metals used for forming the metal layer include various metallic elements (for example, aluminum, iron, copper, and nickel), and an aluminum layer is particularly preferable. The metal layer has a thickness of preferably from 15 µm to 80 µm, and particularly preferably from 20 µm to 60 µm from the viewpoint of deep drawability.

### [Sealant Layer]

The present invention can further provide a laminate in which a sealant layer is laminated on the surface of the metal layer opposite to the surface where the biaxially stretched polyamide film is laminated. The sealant layer may be laminated so as to be in direct contact with the metal layer or may be laminated via another layer, such as an adhesive layer.

The sealant layer is preferably an unstretched polyolefin film. The unstretched polyolefin film is preferably a film including a polyethylene-based resin composition and/or a polypropylene-based resin composition.

When the sealant layer is mainly formed from the polyethylene-based resin composition, examples of the polyethylene-based resin composition include linear low-density polyethylene resins (LLDPE) and low-density polyethylene resins (LDPE). The sealant layer may be either a single-layer structure or a multilayer structure including two or more layers. The sealant layer includes at least one layer formed from the polyethylene-based resin composition and may further include a layer formed from any other resin.

The lower limit of the thickness of the sealant layer is preferably 15 µm, more preferably 20 µm, and particularly preferably 25 µm. The thickness of 15 µm or more facilitates achieving heat seal strength. The upper limit of the thickness of the sealant layer is preferably 80 µm, more preferably 70 µm, and particularly preferably 60 µm. The thickness of 80 µm or less allows the film to have moderate stiffness, thereby making processing of the laminate easier.

The laminate of the present invention can be suitably used for cold forming. In one preferred embodiment, the laminate can be used as a material for packaging and casing batteries, such as lithium batteries.

### EXAMPLES

The followings are methods for evaluating physical properties in the present invention.

### [Film Thickness]

Test pieces, each having a length of 100 mm along the MD direction of the film, were cut out from the film and stacked in 10 layers and conditioned in an environment at 23°C and a relative humidity of 65% for 2 hours or longer. Subsequently, the thicknesses of the stacked test pieces were measured at positions that divided the film into 10 equal parts along the TD direction of the film (in the case of a narrow-width film, the measurement positions were set to divide the film into equal parts with a sufficient width for thickness measurement) using a thickness gauge manufactured by TESTER SANGYO CO., LTD. The film thickness was determined by dividing the average by the number of stacked test pieces.

### [F30/Upper Yield Stress Value]

Test pieces each having a width of 15 mm and a length of 180 mm were cut out from the film in both the MD direction and the TD direction of the film, respectively. The test pieces were then aged in an environment at 23°C and a relative humidity of 65% for 12 hours, and measured with Autograph AG-1 manufactured by Shimadzu Corporation in an environment at 23°C and a relative humidity of 65% at a tensile speed of 360 mm/min with a distance between chucks of 100 mm. The measurement was repeated five times, and the F30/upper yield stress value was determined by dividing the average of the stresses at 30% elongation (F30) of the film by the average of the upper yield stresses.

### [Elongation at Moisture Absorption]

A circular sample having a diameter of 80 mm was cut out from the film. The sample was allowed to stand in an environment at 30°C and a relative humidity of 87% for 2 hours longer, and then the diameters along the MD direction and the TD direction of the film were measured to determine the diameter in high humidity. After that, the sample was allowed to stand in an environment at 20°C and a relative humidity of 44% for 2 hours longer, and then the diameters along the MD direction and the TD direction of the film were similarly measured to determine the diameter in low humidity. The elongation at moisture absorption was calculated according to the following formula. Elongation at Moisture Absorption (%) = [(Diameter in High Humidity - Diameter in Low Humidity)/ Diameter in Low Humidity] × 100

### [Puncture Strength]

The puncture strength was calculated by measuring the strength (unit: N) of the film when being punctured with a needle having a tip diameter of 0.7 mm at a puncture speed of 50 mm/min according to the test method described in JIS Z 1707, and adjusting the measured strength to a film thickness of 25 µm according to the following formula. Puncture Strength (N/25µm) = {Puncture Strength Measured Value (N)/Film Thickness (µm)} × 25

### [Dynamic Coefficient of Friction]

The dynamic coefficient of friction between the same surfaces of the films (arbitrary selected surfaces of the film) was evaluated under the following conditions according to JIS C 2151. The test piece was prepared to have dimensions of 130 mm in width and 250 mm in length, and the measurement was conducted at a testing speed of 150 mm/min.

### [Fabrication of Laminate]

A urethane-based two-component curable adhesive ("TAKELAC" (registered trademark) A525S and "TAKENATE" (registered trademark) A50, manufactured by Mitsui Chemicals, Inc., blended at a mass ratio of 13.5:1.0) was applied to an arbitrary selected surface of the biaxially stretched polyamide film, and "Aluminium foil CE 8079", manufactured by Toyo Aluminium K.K., with a thickness of 40 µm was laminated on the adhesive-coated surface of the film by a dry lamination method. Subsequently, the same urethane-based two-component curable adhesive was similarly applied to the aluminum layer side of the laminate, followed by lamination of an unstretched polypropylene film with a thickness of 70 µm (P1147, manufactured by TOYOBO CO., LTD.) by a dry lamination method. The stacked material was then aged at 40°C for four days to obtain a laminate. The films and the aluminum layer used were laminated so that the longitudinal directions and the width directions of them would be aligned. Each of the adhesive layers formed by the urethane-based two-component curable adhesive had a thickness of 4 µm after drying.

### [Degree of Deep Drawing of Laminate]

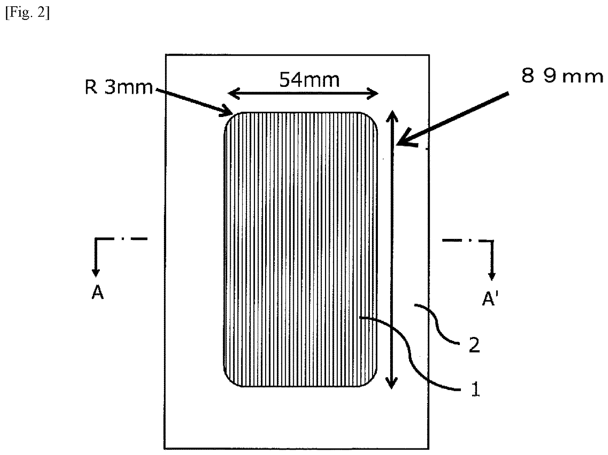

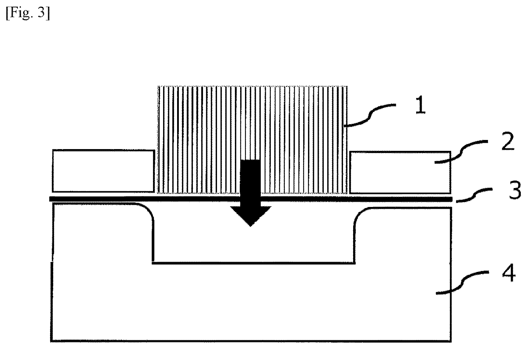

A test piece was cut out from the laminate to have dimensions of 15 cm in the MD direction × 10 cm in the TD direction. The test piece was set to a metal mold shown in Figs. 2 and 3 so that the MD direction and the TD direction of the test piece would be aligned, and deep drawing was carried out by pressing it from the above. Specifically, the laminate was placed on a metal mold that had dimensions of 89 mm in length, 54 mm in width, and a radius of 3 mm, and then pressed with a punch having a corresponding shape to the metal mold in the state that the laminate was held by a film holder. The drawing speed was 6 mm/s.

The deep drawing was conducted with N=10 at each depth, and the maximum depth at which the deep drawing was conducted without tearing and pinholes of the film with N=10 was determined as the degree of deep drawing of the test piece.

### [Film Formation Stability]

In the formation of the films of Examples and Comparative Examples, the case in which a film was continuously formed for 5000 m without breakage during the formation was evaluated as "A", and the case in which a film was not continuously formed for 5000 m because of breakage was evaluated as "B".

### <Production Example>

The raw materials used are as follows.
(1) Polyamide 11
   A resin composition having a relative viscosity of 2.5 and a melting point of 186°C, manufacture by Arkema S.A., was used.
(2) Polyamide 6
   A resin composition having a relative viscosity of 2.8 and a melting point of 220°C, manufacture by TOYOBO CO., LTD., was used.
(3) Porous silica particles
   Porous silica particles having an average particle size of 2.0 µm and a pore volume of 1.6 ml/g, manufactured by FUJI SILYSIA CHEMICAL LTD., were used.

### [Example 1]

The polyamide 11 resin composition [99.85% by mass] and the porous silica particles [0.15% by mass] were fed into an extruder. The resin was melted in the extruder at 260°C, then cast from a T-die set at 260°C, and adhered onto a cooling roll set at 20°C by an electrostatic adhesion method to obtain an unstretched sheet.

Then, the obtained unstretched sheet was stretched in the MD direction by 1.79 times at 70°C, followed by further stretching by 1.79 times at 60°C. Subsequently, the uniaxially stretched sheet was introduced into a tenter, and stretched in the TD direction by 3.8 times at 130°C. Immediately after the TD stretching, the resulting film was subjected to a heat setting treatment at 180°C for 3 seconds, followed by a relaxation treatment by 7% for 1 second, to obtain a biaxially stretched polyamide film having a thickness of 25 µm.

### [Example 2]

A biaxially stretched polyamide film was produced in the same manner as in Example 1 except that the mixing ratio of the raw materials fed into the extruder was changed to the polyamide 11 resin composition [89.87% by mass], the polyamide 6 resin composition [9.98% by mass], and the porous silica particles [0.15% by mass].

### [Example 3]

A biaxially stretched polyamide film was produced in the same manner as in Example 1 except that the mixing ratio of the raw materials fed into the extruder was changed to the polyamide 11 resin composition [79.88% by mass], the polyamide 6 resin composition [19.97% by mass], and the porous silica particlse [0.15% by mass].

### [Example 4]

A biaxially stretched polyamide film was produced in the same manner as in Example 1 except that the unstretched sheet was stretched in the MD direction by 1.73 times at 70°C, followed by further stretching by 1.73 times at 60°C, in the MD stretching process.

### [Example 5]

A biaxially stretched polyamide film was produced in the same manner as in Example 1 except that the unstretched sheet was stretched in the MD direction by 1.92 times at 70°C, followed by further stretching by 1.92 times at 60°C, in the MD stretching process, and that the resulting uniaxially stretched sheet was stretched in the TD direction by 3.9 times at 130°C in the TD stretching process.

### [Example 6]

A biaxially stretched polyamide film was produced in the same manner as in Example 1 except that the unstretched sheet was stretched in the MD direction by 1.92 times at 70°C, followed by further stretching by 1.92 times at 60°C, in the MD stretching process, and that the resulting uniaxially stretched sheet was stretched in the TD direction by 4.3 times at 130°C in the TD stretching process.

Physical properties and evaluation results of laminated films obtained by using the biaxially stretched polyamide films produced in Examples are shown in Table 1.

**[Table 1]**

| | | | | Example 1 | Example 2 | Example 3 | Example 4 | Example 5 | Example 6 |
|---|---|---|---|---|---|---|---|---|---|
| Resin Composition | Polyamide 6 | | wt% | 0 | 9.98 | 19.97 | 0 | 0 | 0 |
| | Polyamide 11 | | | 99.85 | 89.87 | 79.88 | 99.85 | 99.85 | 99.85 |
| | Silica Fine Particle | | | 0.15 | 0.15 | 0.15 | 0.15 | 0.15 | 0.15 |
| MD Direction Stretching Ratio | | | times | 3.2 | 3.2 | 3.2 | 3.0 | 3.7 | 3.7 |
| TD Direction Stretching Ratio | | | times | 3.8 | 3.8 | 3.8 | 3.8 | 3.9 | 4.3 |
| Area Stretching Ratio | | | times | 12.2 | 12.2 | 12.2 | 11.4 | 14.4 | 15.9 |
| Film Thickness | | | µm | 25 | 25 | 25 | 25 | 25 | 25 |
| Elongation at Moisture Absorption | | MD | % | 0.10 | 0.20 | 0.22 | 0.12 | 0.12 | 0.13 |
| | | TD | | 0.10 | 0.20 | 0.32 | 0.12 | 0.13 | 0.09 |
| Dynamic Coefficient of Friction | | | - | 0.52 | 0.55 | 0.55 | 0.56 | 0.46 | 0.42 |
| Puncture Strength | | | N/25µm | 18.4 | 19.3 | 18.0 | 18.4 | 17.6 | 18.4 |
| F30/Upper Yield Stress Value | | MD | - | 1.66 | 1.71 | 1.67 | 1.50 | 2.03 | 1.89 |
| | | TD | | 2.52 | 2.55 | 2.51 | 2.64 | 2.34 | 2.97 |
| Degree of Deep Drawing | | | mm | 4.0 | 4.0 | 4.0 | 4.2 | 4.6 | 4.8 |
| Film Formation Stability | | | - | A | A | A | A | A | A |

### [Comparative Example 1]

A biaxially stretched polyamide film was produced in the same manner as in Example 1 except that the mixing ratio of the raw materials fed into the extruder was changed to the polyamide 11 resin composition [29.96% by mass], the polyamide 6 resin composition [69.89% by mass], and the porous silica particles [0.15% by mass]. Because of the frequent breakages during the film formation, the film was judged to have poor film formation stability. Furthermore, samples sufficient for measuring the physical properties could not be obtained.

### [Comparative Example 2]

A biaxially stretched polyamide film was produced in the same manner as in Example 1 except that the mixing ratio of the raw materials fed into the extruder was changed to the polyamide 11 resin composition [19.97% by mass], the polyamide 6 resin composition [79.88% by mass], and the porous silica particles [0.15% by mass]. The resulting biaxially stretched polyamide film showed significant elongation at moisture absorption and had poor quality.

### [Comparative Example 3]

A biaxially stretched polyamide film was produced in the same manner as in Example 1 except that the mixing ratio of the raw materials fed into the extruder was changed to the polyamide 11 resin composition [9.98% by mass], the polyamide 6 resin composition [89.97% by mass], and the porous silica particles [0.15% by mass]. The resulting biaxially stretched polyamide film showed significant elongation at moisture absorption and had poor quality.

### [Comparative Example 4]

A biaxially stretched polyamide film was produced in the same manner as in Example 1 except that an unstretched sheet was stretched in the MD direction by 1.73 times at 70°C, followed by further stretching by 1.73 times at 60°C, in the MD stretching process, and that the resulting uniaxially stretched sheet was stretched in the TD direction by 3.3 times at 130°C in the TD stretching process. Since the resulting biaxially stretched polyamide film had low puncture strength and a small F30/upper yield stress value, the film had inferior deep drawability.

### [Comparative Example 5]

A biaxially stretched polyamide film was produced in the same manner as in Example 1 except that an unstretched sheet was stretched in the MD direction by 1.92 times at 70°C, followed by further stretching by 1.92 times at 60°C, in the MD stretching process, and that, the resulting uniaxially stretched sheet was stretched in the TD direction by 4.5 times at 130°C. Because of frequent breakages during the film formation, the film was judged to have poor film formation stability.

Physical properties and evaluation results of laminated films obtained by using the biaxially stretched polyamide films produced in Comparative Examples are shown in Table 2.

**[Table 2]**

| | | | | Comparative Example 1 | Comparative Example 2 | Comparative Example 3 | Comparative Example 4 | Comparative Example 5 |
|---|---|---|---|---|---|---|---|---|
| Resin Composition | Polyamide 6 | | wt% | 69.89 | 79.88 | 89.97 | 0 | 0 |
| | Polyamide 11 | | | 29.96 | 19.97 | 9.98 | 99.85 | 99.85 |
| | Silica Fine Particle | | | 0.15 | 0.15 | 0.15 | 0.15 | 0.15 |
| MD Direction Stretching Ratio | | | times | 3.2 | 3.2 | 3.2 | 3.0 | 3.7 |
| TD Direction Stretching Ratio | | | times | 3.8 | 3.8 | 3.8 | 3.3 | 4.5 |
| Area Stretching Ratio | | | times | 12.2 | 12.2 | 12.2 | 9.9 | 16.7 |
| Film Thickness | | | µm | 25 | 25 | 25 | 25 | 25 |
| Elongation at Moisture Absorption | | MD | % | - | 0.32 | 0.31 | 0.11 | 0.11 |
| | | TD | | - | 1.26 | 1.11 | 0.11 | 0.11 |
| Dynamic Coefficient of Friction | | | - | - | 0.53 | 0.55 | 0.62 | 0.41 |
| Puncture Strength | | | N/25µm | - | 18.2 | 22.7 | 16.5 | 18.9 |
| F30/Upper Yield Stress Value | | MD | - | - | 1.71 | 1.73 | 1.49 | 1.91 |
| | | TD | | - | 2.55 | 2.43 | 1.89 | 3.11 |
| Degree of Deep Drawing | | | mm | - | 4.1 | 4.0 | 3.8 | 5.1 |
| Film Formation Stability | | | - | B | A | A | A | B |

### EXPLANATION OF LETTERS OR NUMERALS

1: Punch
2: Film holder
3: Laminated film
4: Metal mold

## Claims

1. A biaxially stretched polyamide film for cold forming, comprising a polyamide 11 in an amount of 80% by mass or more and 100% by mass or less,
wherein the film has an F30/upper yield stress value of 2.0 or more and 3.0 or less in a direction having a larger F30/upper yield stress value between a flow direction and a transverse direction of the film, where the F30/upper yield stress value is obtained by dividing a stress at 30% elongation (F30) by the upper yield stress.

2. The biaxially stretched polyamide film for cold forming according to claim 1, wherein the film has elongations at moisture absorption of 0% or more and 0.5% or less in both the flow direction and the transverse direction of the film.

3. The biaxially stretched polyamide film for cold forming according to claim 1, wherein the film has a value (N/25µm) obtained by adjusting a puncture strength (N) to a film thickness of 25 µm of 17 N/25µm or more.

4. The biaxially stretched polyamide film for cold forming according to claim 1, wherein the film has a dynamic coefficient of friction of 0.1 or more and 1.0 or less.

5. A laminate comprising the biaxially stretched polyamide film for cold forming according to any one of claims 1 to 4 and a metal layer laminated on at least one surface of the film.

6. The laminate according to claim 5, wherein the metal layer is an aluminum layer having a thickness of 15 µm or more and 80 µm or less.

7. The laminate according to claim 6, wherein the laminate includes the biaxially stretched polyamide film for cold forming, the metal layer, and a sealant layer laminated in this order.

8. A battery packaging material including the laminate according to claim 7.
